# EUROPEAN PATENT SPECIFICATION

(11) **EP 1 306 261 B1**
(45) Date of publication and mention of the grant of the patent: **04.06.2008**
(21) Application number: 02023873.9
(22) Date of filing: 24.10.2002
(51) Int. Cl.: B60K 23/04, B60K 23/08, B60K 17/16

(54) **A permanent four wheel drive motor vehicle**
Kraftfahrzeug mit permanenten Vierradantrieb
Véhicule automobile à quatre roues motrices permanentes

(30) Priority: 26.10.2001 IT TO20011028
(43) Date of publication of application: 02.05.2003
(73) Proprietor: C.R.F. SOCIETÀ CONSORTILE PER AZIONI, 10043 Orbassano (TO) (IT)
(72) Inventor: Mesiti, Domenico, I-10040 Leini' (Torino) (IT); Caenazzo, Dario, 10060 Scalenghe (Torino) (IT)
(74) Representative: Quinterno, Giuseppe

(56) References cited:
- GB-A- 2 280 157
- US-A- 4 874 059

## Description

The present invention relates to a permanent four wheel drive motor vehicle (AWD or 4WD) of the kind defined in the preamble of claim 1. DE-A-3 914 695 discloses a 4WD motor-vehicle of this kind including a viscous (or equivalent) coupling device to dissipate the wind-up torque of the transmission.

US-A-4 874 059 discloses a 4WD motor-vehicle in which the division of the drive torque between the front axle and the rear axle is actively controlled by means of a central differential gear and an electronically, controlled hydraulic coupling. A differential limiting mechanism is coupled to the rear axle wherein both outputs of the rear differential gear are solid with, i.e. in one piece with the corresponding half-shafts of the rear wheels.

This known arrangement is structurally complex, bulky and expensive.

The present invention proposes to provide a four wheel drive motor vehicle in which the division of torque between axles is actively controllable using less bulky and structurally simpler devices, characterised by a high operating efficiency.

This and other objects are achieved according to the invention by a motor vehicle of the above-mentioned type, the essential characteristics of which are defined in the annexed Claim 1 and by the method defined in claim 5.

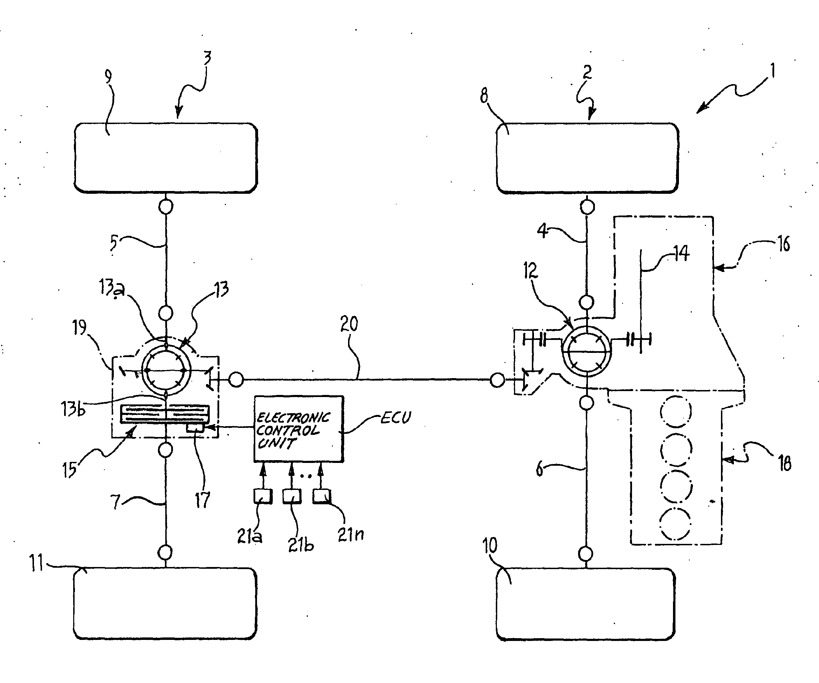

Further characteristics and advantages of the invention will become apparent from the following detailed description, given purely by way of non-limitative example, with reference to the attached drawing which schematically illustrates the propulsion and transmission system of a motor vehicle according to the invention.

In the drawing a permanent four wheel drive motor vehicle is generally indicated with reference numeral 1. This motor vehicle includes a front axle 2 and a rear axle 3.

The front axle comprises two half-shafts 4 and 6, coupled to respective wheels 8 and 10. Between the half-shafts 4 and 6 is interposed a differential 12 which, in a manner known per se, is coupled on one side to the output shaft 14 of a gear box 16. This gearbox is coupled to the internal combustion engine 18 of the motor vehicle, which is, for example, a four-stroke engine having four cylinders in-line in a transverse arrangement.

The differential 12 is further coupled to the front end of a transmission shaft 20 which extends longitudinally of the motor vehicle.

The transmission shaft 20 couples the front axle 2 to the rear axle 3. This latter comprises two half-shafts 5 and 7 to which are connected respective wheels 9 and 11.

Between these half-shafts is interposed a differential 13. This differential receives at its input the drive from the rear end of the transmission shaft 20.

The output shafts or drive shafts 13a, 13b, of the differential 13 are connected, one directly to the half-shaft 5 and the other to the half-shaft 7 via a controlled coupling device generally indicated 15. Conveniently, this controlled coupling device comprises a friction clutch, preferably a multiple disc wet clutch.

The coupling device 15 is controlled by an electronic control unit ECU via an actuator device 17 or type known per se, for example of the electromagnetic or electro hydraulic control type.

Conveniently, the coupling device 15 and the associated actuator device 17 are disposed in the same casing 19 which encloses the rear differential 13.

The control unit ECU, which for example includes a micro processor, is arranged in a manner known per se to control the coupling device 15 (via the actuator 17) in a pre established manner as a function of the working conditions indicated by sensors 21a to 21n, in such a way as correspondingly to control the transfer of torque from the transmission shaft 20 to the half-shaft 7 of the rear axle 3.

For modulation of the torque thus transferred it is necessary for there to be an even though modest speed difference between the discs of the friction clutch 15 which is obtainable by means of a suitable selection of the transmission ratios at the front and rear axles.

The invention allows active control of the division of the torque between the front and rear axles by controlled management of the fraction of the power which is transferred to the rear axle, with consequent reduction in the power dissipated.

## Claims

1. A permanent four wheel drive motor vehicle including a first, driven, axle (2) coupled by means of a transmission shaft (20) to a second axle (3) which includes two half-shafts (5,7) between which is interposed a differential (13);
a controlled coupling device (15) being interposed between the said differential (13) and one half-shaft (7) of the second axle (3), and an electronic control unit (ECU) being arranged to control the said coupling device (15) in such a way as to control the transfer of torque from the transmission shaft (20) to the said half-shaft (7) in a predetermined manner;
one output (13b) of said differential (13) and the corresponding half-shaft (7) of the second axle (3) being separate one from the other and adapted to be variably coupled with each other via the said coupling device (15); said axles (2, 3) being coupled with each other without a central differential;
**characterized in that** the coupling device (15) comprises a multiple disc friction clutch and the transmission ratios at the front and rear axles (2, 3) are selected such that in operation of the vehicle there is a speed difference between the discs of said friction clutch (15).

2. A motor vehicle according to Claim 1, in which the said coupling device (15) includes a multiple disc wet clutch.

3. A motor vehicle according to Claim 1 or Claim 2, in which the said coupling device (15) is disposed in the same casing (19) which encloses the differential (13) of the second axle (3).

4. A motor vehicle according to any preceding claim, in which the said coupling device (15) is associated with a command actuator (17) of electromagnetic or electro-hydraulic type.

5. A method for controlling the division of drive torque between a first, driven, axle (2) and a second axle (3) of a permanent four wheel drive motor-vehicle (1) wherein
the first axle (2) is coupled to the second axle (3) by means of a transmission shaft (20),
the second axle (3) includes two half-shafts (5, 7) between which is interposed a differential (13), and
a controlled coupling device (15) comprising a multiple disc friction clutch is associated with said differential (13) and one half-shaft (7) of the second axle (3);
the method including:
- providing said controlled coupling device (15) between one output (13b) of said differential (13) and the corresponding half-shaft (7) of the second axle (3) which are separate one from the other;
- coupling said axles (2, 3) with each other without a central differential,
- selecting the transmission ratios at the front and rear axles (2, 3) such that in operation of the vehicle there is a speed difference between the discs of said friction clutch (15), and
- variably coupling said output (13b) of said differential (13) and the corresponding half-shaft (7) of the second axle (3) by means of said controlled coupling device (15).

## Patentansprüche

1. Kraftfahrzeug mit permanentem Allradantrieb, das enthält: eine erste angetriebene Achse (2), die mit Hilfe einer Antriebswelle (20) mit einer zweiten Achse (3) gekoppelt ist, die zwei Halbwellen (5, 7) enthält, zwischen denen ein Differenzial (13) eingefügt ist,
eine geregelte Kupplungseinrichtung (15), die zwischen dem Differenzial (13) und einer Halbwelle (7) der zweiten Achse (3) eingefügt ist, und eine elektronische Steuereinheit (ECU), die eingerichtet ist, um die Kupplungseinrichtung (15) derartig zu regeln, dass die Übertragung von Drehmoment von der Antriebswelle (20) auf die Halbwelle (7) in einer vorgegebenen Weise gesteuert wird,
wobei ein Ausgang (13b) des Differenzials (13) und die entsprechende Halbwelle (7) der zweiten Achse (3) voneinander getrennt sind und eingerichtet sind, um über die Kupplungseinrichtung (15) variabel miteinander gekuppelt zu werden, wobei die Achsen (2, 3) ohne ein Zentraldifferenzial miteinander gekuppelt werden,
und **dadurch gekennzeichnet ist, dass** die Kupplungseinrichtung (15) eine Lamellenreibungskupplung umfasst und die Übersetzungsverhältnisse an der Vorder- und Hinterachse (2, 3) so gewählt werden, dass bei Betrieb des Fahrzeugs zwischen den Scheiben der Reibungskupplung (15) eine Drehzahldifferenz besteht.

2. Kraftfahrzeug nach Anspruch 1, wobei die Kupplungseinrichtung (15) eine Lamellen-Nasskupplung enthält.

3. Kraftfahrzeug nach Anspruch 1 oder 2, wobei die Kupplungseinrichtung (15) in demselben Gehäuse (19) angeordnet ist, das das Differenzial (13) der zweiten Achse (3) einschließt.

4. Kraftfahrzeug nach einem der vorhergehenden Ansprüche, wobei die Kupplungseinrichtung (15) mit einem Steuerstellantrieb (17) eines elektromagnetischen oder elektrohydraulischen Typs verbunden ist.

5. Verfahren zum Regeln der Antriebsmomentverteilung zwischen einer ersten angetriebenen Achse (2) und einer zweiten Achse (3) eines Kraftfahrzeugs (1) mit permanentem Allradantrieb, wobei
die erste Achse (2) mit Hilfe einer Antriebswelle (20) mit der zweiten Achse (3) gekoppelt ist,
die zweite Achse (3) zwei Halbwellen (5, 7) enthält, zwischen denen ein Differenzial (13) eingefügt ist, und
eine geregelte Kupplung (15), die eine Lamellenreibungskupplung umfasst, mit dem Differenzial (13) und einer Halbwelle (7) der zweiten Achse (3) verbunden ist,
und das Verfahren umfasst:
- Bereitstellen der geregelten Kupplungseinrichtung (15) zwischen einem Ausgang (13b) des Differenzials (13) und der entsprechenden Halbwelle (7) der zweiten Achse (3), die voneinander getrennt sind,
- Kuppeln der Achsen (2, 3) miteinander, ohne ein Zentraldifferenzial,
- Auswählen der Übersetzungsverhältnisse an der Vorder- und Hinterachse (2, 3) derartig, dass während des Betriebs des Fahrzeugs zwischen den Scheiben der Reibungskupplung (15) eine Drehzahldifferenz besteht, und
- variables Kuppeln des Ausgangs (13b) des Differenzials (13) und der entsprechenden Halbwelle (7) der zweiten Achse (3) mit Hilfe der geregelten Kupplungseinrichtung (15).

## Revendications

1. Véhicule automobile à quatre roues motrices permanentes incluant un premier axe entraîné (2) couplé au moyen d'un arbre de transmission (20) à un second axe (3) qui inclut deux demi-arbres (5, 7) entre lesquels est intercalé un différentiel (13) ;
un dispositif de couplage commandé (15) étant intercalé entre ledit différentiel (13) et un demi-arbre (7) du second axe (3), et une unité de commande électronique (ECU) étant agencée pour commander ledit dispositif de couplage (15) de façon à commander le transfert de couple d'un arbre de transmission (20) au dit demi-arbre (7) d'une manière prédéterminée ;
une sortie (13b) dudit différentiel (13) et le demi-arbre (7) correspondant du second axe (3) étant séparés l'un de l'autre et adaptés pour être couplés de manière variable ensemble via ledit dispositif de couplage (15) ; lesdites axes (2, 3) étant couplés ensemble sans un différentiel central ;
**caractérisé en ce que** le dispositif de couplage (15) comprend un embrayage à frottement à disques multiples et les rapports de transmission au niveau des axes avant arrière (2, 3) sont sélectionnés de telle manière que lors du fonctionnement du véhicule il y a une différence de vitesse entre les disques dudit embrayage à frottement (15).

2. Véhicule à moteur selon la revendication 1, dans lequel ledit dispositif de couplage (15) inclut un embrayage à huile à disques multiples.

3. Véhicule à moteur selon la revendication 1 ou la revendication 2, dans lequel ledit dispositif de couplage (15) est disposé dans le même logement (19) qui entoure le différentiel (13) du second axe (3).

4. Véhicule à moteur selon l'une quelconque des revendications précédentes, dans lequel ledit dispositif de couplage (15) est associé à un actionneur de commande (17) du type électromagnétique ou hydraulique.

5. Procédé de commande de la division du couple moteur entre un premier axe entraîné (2) et un second axe (3) d'un véhicule à moteur à quatre roues motrices permanentes (1) dans lequel
le premier axe (2) est couplé au second axe (3) au moyen d'un arbre de transmission (20),
le second axe (3) inclut deux demi-arbres (5, 7) entre lesquels est intercalé un différentiel (13), et
un dispositif de couplage commandé (15) comprenant un embrayage à frottement à disques multiples est associé avec ledit différentiel (13) et un demi-arbre (7) du second axe (3) ;
le procédé comprenant :
fournir ledit dispositif de couplage (15) commandé entre une sortie (13b) dudit différentiel (13) et le demi-arbre (7) correspondant du second axe (3) qui sont séparés l'un de l'autre ;
coupler lesdits axes (2, 3) ensemble sans un différentiel central,
sélectionner les rapports de transmission au niveau des axes avant et arrière (2, 3) de telle manière que lors du fonctionnement du véhicule il y a une différence de vitesse entre les disques dudit embrayage à frottement (15), et
coupler de manière variable ladite sortie (13b) dudit différentiel (13) et le demi-arbre (7) correspondant du second axe (3) au moyen dudit dispositif de couplage (15) commandé.
